# EUROPÄISCHE PATENTSCHRIFT

(11) **EP 0 403 752 B1**
(45) Veröffentlichungstag und Bekanntmachung des Hinweises auf die Patenterteilung: **27.12.1995**
(21) Anmeldenummer: 90107145.6
(22) Anmeldetag: 14.04.1990
(51) Int. Cl.: H04N 5/262, H04N 5/265

(54) **Anordnung zur Erzeugung von Ein -und Ausblendeffekten**
Device generating fade-in, fade-out effects
Dispositif de génération d'effets de fondu enchaîné

(30) Priorität: 23.06.1989 DE 3920617
(43) Veröffentlichungstag der Anmeldung: 27.12.1990
(73) Patentinhaber: Grundig E.M.V. Elektro-Mechanische Versuchsanstalt Max Grundig GmbH & Co. KG, 90762 Fürth (DE)
(72) Erfinder: Mahmud, Shabaz, Grundig E.M.V., Max Grundig, D-8510 Fürth/Bay (DE)

(56) Entgegenhaltungen:
- US-A- 3 944 731
- US-A- 4 356 511
- US-A- 4 488 180

## Beschreibung

Die Erfindung betrifft eine Anordnung zur Erzeugung von Ein- und Ausblendeffekten in Videogeräten, deren Bildsignale digital verarbeitet werden.

Durch die immer stärkere Verbreitung von Videokameras im Hobbybereich werden auch die Anforderungen, die bezüglich der Nachbearbeitung, aber auch des Aufnahmekomforts gestellt werden, immer höher. Deshalb ist man bestrebt, Bearbeitungsmöglichkeiten, wie z. B. Ein-/Ausblendmöglichkeiten, die aus dem Profibereich bekannt sind, in den Bereich der Konsumelektronik zu übertragen, wobei das Gewicht hier insbesondere auf eine kostengünstige Herstellung gelegt wird.

Aus der US-Patentschrift US-A-4,488,180 ist ein Verfahren zur Umschaltung zwischen zwei Videosignalquellen zur Anzeige auf einem Monitor bekannt, bei dem mittels eines Komparators die Zählwerte eines Zeilenzählers und eines Pixelzählers mit dem in einem Mustergenerator erzeugten Zählwert verglichen werden. In Abhängigkeit des Vergleichsergebnisses wird das Signal der einen oder der anderen Videoquelle durchgeschaltet. Die Steuersignale für die Weiterschaltung der Zähler und das Rücksetzen der Zähler werden von einem Steuerkreis erzeugt, der auch einen Zähler für die Bildwechsel ansteuert.

Aufgabe der Erfindung ist es deshalb, eine Anordnung zum Ein-/Ausblenden von Szenen in Videoaufzeichnungen anzugeben, die eine breite Anwendungsvielfalt ermöglicht, deren Aufbau für den Einsatz in Videorecordern oder Videokameras aus dem Konsumbereich einfach, universell einsetzbar und kostengünstig ist.

Diese Aufgabe wird durch die Anordnung gemäß Anspruch 1 gelöst. Vorteilhafte Ausgestaltungen dieser Anordnung ergeben sich aus den abhängigen Ansprüchen.

Die Erfindung wird im folgenden an Hand der Figuren 1 bis 8 erläutert.
Figur 1 zeigt ein Blockschaltbild der erfindungsgemäßen Anordnung.
Die Figuren 2 bis 6 zeigen verschiedene Ein-/Ausblendmuster, die mit der erfindungsgemäßen Anordnung realisierbar sind.
Figur 7 zeigt eine Ausgestaltung der Anordnung nach Figur 1.
Figur 8 zeigt ein diagonal von den Ecken beginnendes Ein-/Ausblendmuster.

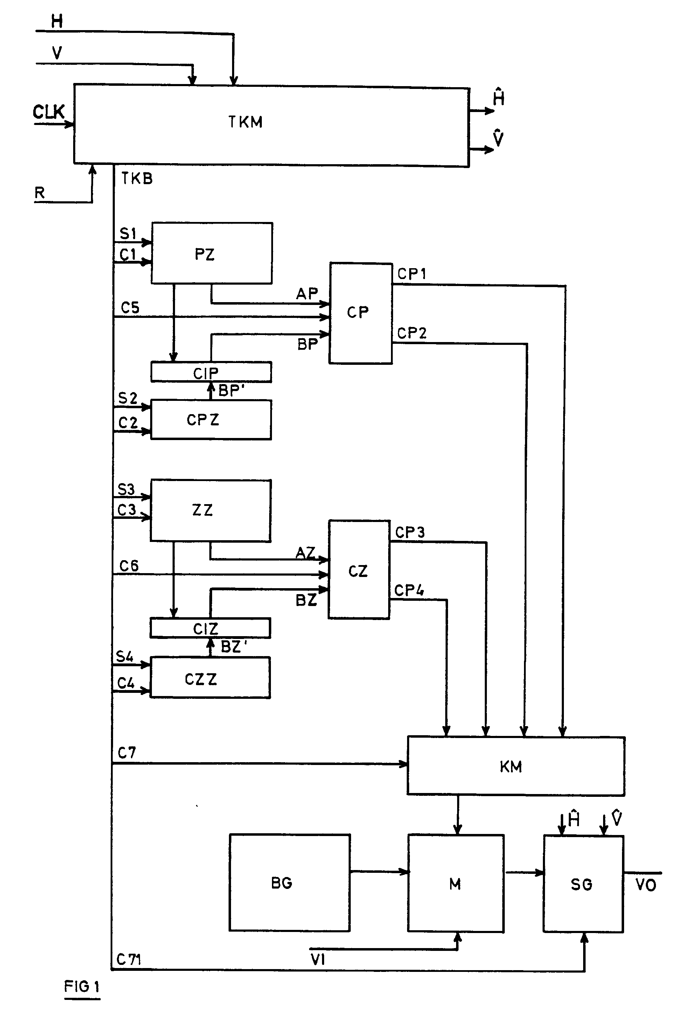

Im folgenden wird das Blockschaltbild nach Figur 1 beschrieben.

An das Timing/Kontrollmodul TKM werden die Horizontal- und Vertikal-Synchronimpulse H und V, weiterhin ein Reset-Signal R und ein Taktsignal CLK geführt. Der Timing-Kontroll-Bus TKB führt die Steuersignale vom Timing/Kontrollmodul TKM an die einzelnen Bausteine der Anordnung. Dem Pixelzähler PZ wird ein Signaltakt S1 und ein Kontrollsignal C1, dem Pixelzähler CPZ wird ein Signaltakt S2 und ein Kontrollsignal C2 zugeführt. Die Zeilenzähler ZZ und CZZ sind verbunden mit den Signaltaktimpulsen S3 und S4 sowie den Kontrollsignalen C3 und C4.

Die Ausgänge des Pixelzählers CPZ und des Zeilenzählers CZZ führen an kontrollierte Inverter CIP und CIZ, welche den Zählerstand unverändert weitergeben oder invertieren können. Am Ausgang des kontrollierten Inverters CIP liegt der Zählerstand BP und am Ausgang des kontrollierten Inverters CIZ liegt der Zählerstand BZ. Die Funktion der kontrollierten Inverter wird durch das Übertragsbit der Zähler in der später erläuterten Weise gesteuert.

Zum Komparator CP führt der Zählerstand AP des Pixelzählers PZ und der Zählerstand BP des kontrollierten Inverters CIP und weiterhin das Kontrollsignal C5. An den Eingängen des Komparators CZ liegen die Zählerstände AZ und BZ des Zeilenzählers ZZ und des kontrollierten Inverters CIZ. Die Ansteuerung des Komparators erfolgt durch das Kontrollsignal C6. An den Eingängen des Kontrollmoduls KM liegen die Ausgangssignale der Komparatoren CP und CZ. Der Ausgang dieses Moduls ist verbunden mit dem Multiplexer M, an dessen Eingängen ein Videosignal VI und das Ausgangssignal des Generators BG liegen. Der Ausgang des Multiplexers M führt an die Logikschaltung SG, an deren Ausgang das bearbeitete Videosignal VO liegt.

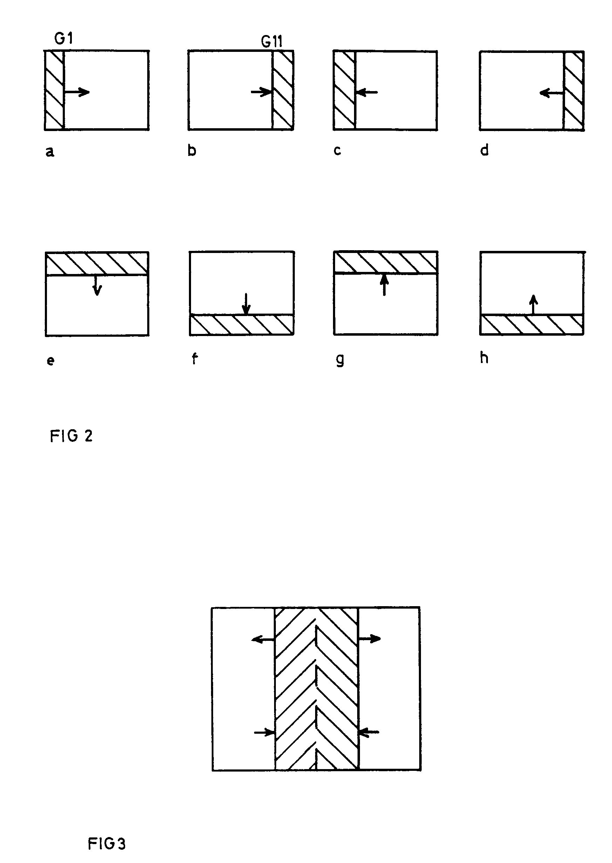

Die Erläuterung der Funktionsweise der in Figur 1 beschriebenen Anordnung erfolgt an Ein-/Ausblendbeispielen, die in Figur 2 dargestellt sind. Die Zählrichtung der Zählerstände AP und BP bzw. AZ und BZ werden mit angegeben. Die kontrollierten Inverter CIP und CIZ sind im folgenden so angesteuert, daß sie die Zählerstände der Zähler CPZ und CZZ unverändert weitergeben. In den Bildern 2, 3, 4, 5 kennzeichnet der schraffierte Teil Bildsignale aus dem Generator BG.

In Figur 2a wird ein Bild vom linken Rand her ausgeblendet. Bei dieser Funktion werden die Pixelzähler PZ und CPZ durch die Kontrollsignale C1 und C2 aktiviert. Ebenso der Komparator CP durch das Kontrollsignal C5. Am Pixelzähler PZ liegt noch das Zählsignal S1 mit der Abtastfrequenz, die bei der AD-Wandlung des Videosignals benutzt wird, d.h. daß dieser Zähler seinen Zählerstand entlang der horizontalen Bildlinie jeweils entsprechend der Horizontalauflösung des Bildes mit jedem Pixel erhöht. Dieser Zähler wird nach jeder Zeile rückgesetzt und beginnt mit Anfang der nächsten Zeile wieder zu zählen. Der Zählerstand des Pixelzählers CPZ wird nach jedem Bild oder Halbbild erhöht. Die Zählwerte AP und BP der Zähler werden im Komparator CP miteinander verglichen. Durch die Komparatorausgänge CP1 und CP2 wird das Kontrollmodul KM angesteuert, das wiederum den Multiplexer M ansteuert. Diese Ansteuerung erfolgt so, daß jeweils das Signal des Generators BG, z. B. ein vorgegebener Grauwert, durchgesteuert wird, wenn der Zählerstand des Pixelzählers PZ kleiner ist, als der Zählerstand des Pixelzählers CPZ, d.h. wenn die aktuelle Position des verarbeiteten Videosignals links der Grenze G1 in Figur 2a ist. Die Grenze G1 wird dabei durch den Pixelzähler CPZ vorgegeben. Entsprechend wird das Videosignal durchgesteuert, wenn die aktuelle Position des verarbeiteten Videosignals rechts von G1 liegt, d. h. wenn der Zählerstand AP größer ist als der Zählerstand BP.

Mit dem Kontrollsignal C71 wird noch die Logikschaltung SG aktiviert, die sicherstellt, daß der Synchronisationsrahmen des Videosignals nicht gestört wird. Je nach der geforderten zeitlichen Auflösung des Ausblendvorgangs kann die Dimensionierung der Zähler um ein oder mehrere bits reduziert werden. Wenn z. B. pro Bild oder Halbbild die Grenze G1 um 2 Pixel verschoben wird, kann das niedrigste bit des Pixelzählers PZ vernachlässigt werden und der Pixelzähler CPZ zählt pro Bild oder Halbbild nur einen Wert höher, womit ein bit beim Pixelzähler CPZ eingespart ist, ebenso wird beim Komparator ein Vergleichsbit eingespart.

Beim Einblenden eines Bildes wird durch die Kontrolleinheit KM der Multiplexer (M) so angesteuert, daß das Videosignal durchgesteuert wird, wenn der Pixelzähler PZ einen kleineren Wert aufweist als der Pixelzähler CPZ, d.h. wenn die aktuelle Position des verarbeiteten Videosignals links von G11 in Bild 2b liegt. Das Kontrollsignal C7 aktiviert dabei das Kontrollmodul KM und gibt ihm den Arbeitsmodus, d.h. den Ein- oder Ausblendvorgang an.

Das Ein- und Ausblenden von der rechten Seite erfolgt in der gleichen Weise wie dies beim Ein-/Ausblenden von der linken Seite aus beschrieben ist, wobei der Zähler CPZ nicht von Null nach oben zu zählen beginnt, sondern von seinem höchsten Wert, also an rechter Position, nach unten zählt. Die Bilder 2c und 2d zeigen den Verlauf des Ein- und Ausblendens von der rechten Seite.

Das Aus- und Einblenden von oben nach unten oder von unten nach oben, dargestellt in den Figuren 2e bis 2h, erfolgt in der gleichen Weise wie von links nach rechts und umgekehrt, wobei in diesem Fall die Zeilenzähler ZZ und CZZ, und der entsprechende Komparator CZ aktiv sind.

In Fig. 3 wird dargestellt, wie der Ein-/Ausblendvorgang in der Mitte startet. Der Pixelzähler CPZ wird in diesem Fall so angesteuert, daß er von seinem oberen Grenzwert, in diesem Fall dem Zählwert in der Bildmitte entspricht, nach unten zählt. Der Pixelzähler PZ zählt von einem Anfangswert hoch, so daß er in der Bildmitte den oberen Grenzwert des Pixelzählers CPZ erreicht und danach ein Übertragsbit erzeugt und von Null zu zählen beginnt. Das Übertragsbit steuert den kontrollierten Inverter CIP, der den Zählerstand des Pixelzählers CPZ invertiert. Zugleich wird über das Kontrollsignal C5 der Komparator CP so beeinflußt, daß die Vergleichsbedingung umgekehrt wird. Diese Ansteuerung bewirkt, daß der Pixelzähler bei jeder Zeile von einem Anfangswert zur Bildmitte zählt und danach von Null bis zum Endwert, wobei der Endwert der invertierte Anfangswert ist. Der Vergleich findet bis zur Bildmitte mit dem Wert des Pixelzählers in der Form statt, daß beim Ausblenden ein Grauwert durchgesteuert wird, wenn der Zählerwert BP des Pixelzählers CPZ kleiner ist als der Zählerwert AP des Pixelzählers PZ, im anderen Fall wird das Videosignal durchgesteuert.

Nach Überschreiten der Bildmitte wird der Zählwert des Pixelzählers PZ mit dem invertierten Wert des Pixelzählers CPZ verglichen, wobei nach der Bildmitte der Grauwert durchgesteuert wird, wenn der Wert des Pixelzählers PZ kleiner oder gleich dem invertierten Wert des Pixelzählers CPZ ist, also umgekehrt als vor der Bildmitte.

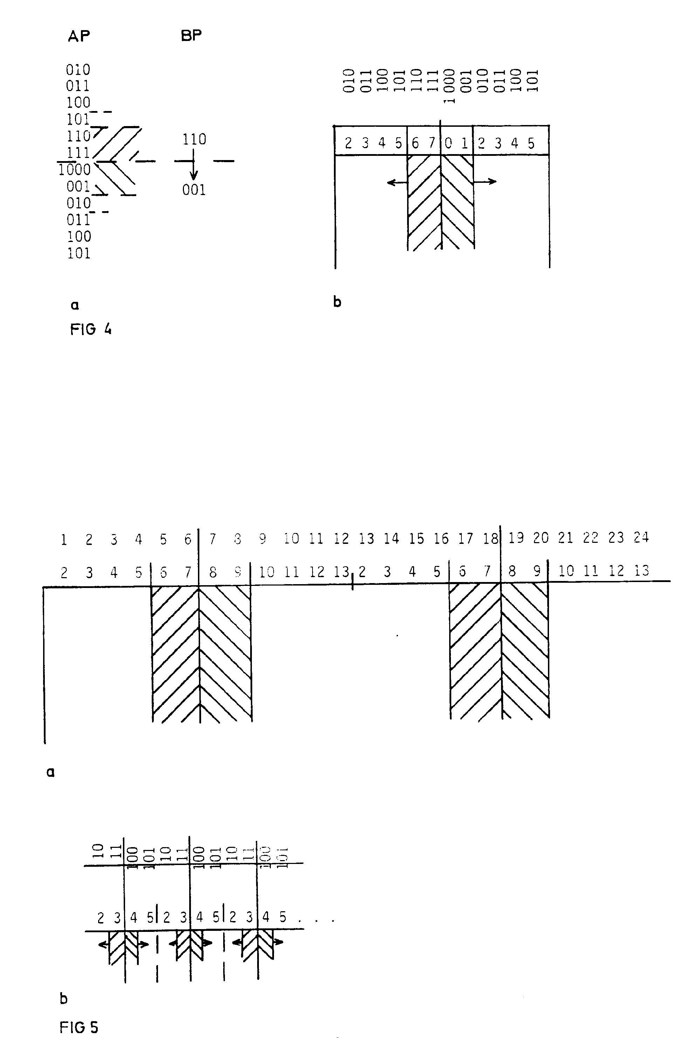

In Figur 4a und 4b wird dieser Vorgang noch erläutert, unter der Annahme, daß die horizontale Auflösung 12 Pixel beträgt. Der Anfangswert liegt bei 2, binär: 010. Der Zählwert AP des Pixelzähles PZ wird von 2 beginnend bis nach 7, binär 111, hochgezählt. Anschließend entsteht ein Übertragsbit und der Zähler zählt bei 0 weiter bis 5, binär 101, invertiert 010, also 2. Das Übertragsbit steuert die Invertierung des Zählwertes BP des Pixelzählers CPZ. Ebenso muß an dieser Stelle die Komparatorbedingung vertauscht werden, damit innerhalb der Grauwertgrenzen auch tatsächlich der Grauwert durchgeschaltet wird.

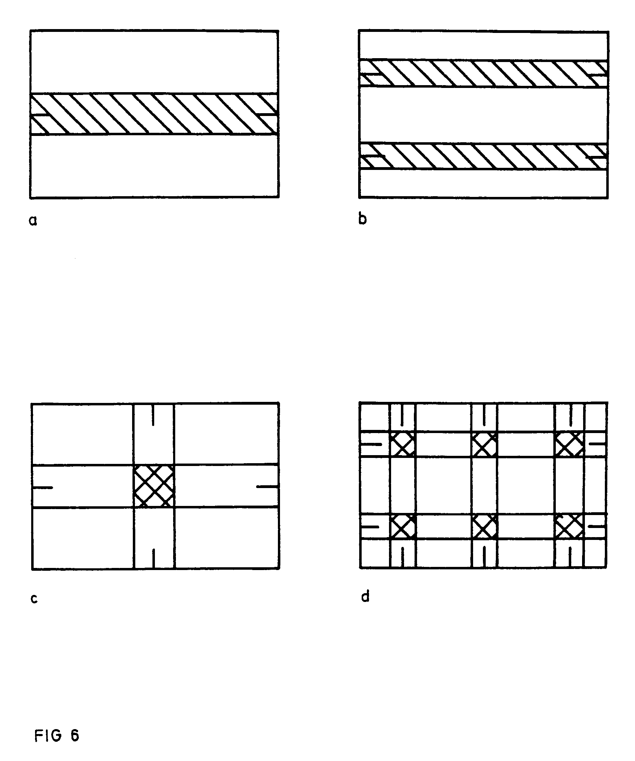

Die Figuren 5a und 5b zeigen, wie durch feinere Unterteilung (Fig. 5a) bzw. durch andere Zählergrenzwerte die Ein-/Ausblendmöglichkeiten weiter ausgebaut werden können, so daß man von beliebig vielen Stellen streifenförmig ein- oder ausblenden kann.

Das streifenförmige Ein-/Ausblenden ist ebenso in der oben beschriebenen Weise in vertikaler Richtung möglich, so daß sich Muster nach Fig. 6a, 6b, ergeben.

Durch gleichzeitige Anwendung von sowohl horizontaler als auch vertikaler streifenförmiger Ein-/Ausblendung entstehen schachbrettartige Muster, wie in Fig. 6c, 6d, dargestellt.

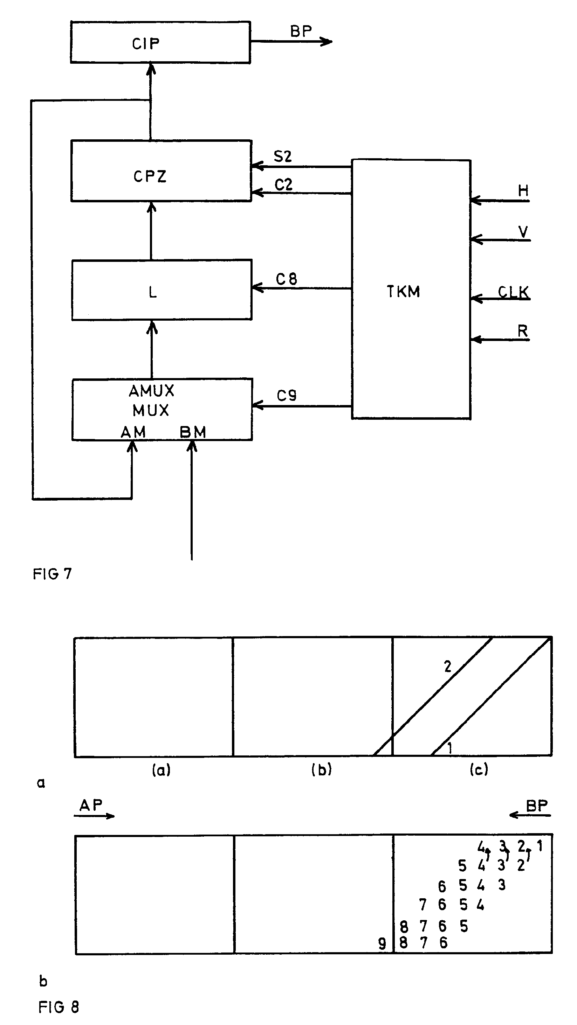

Eine weitere vorteilhafte Ausgestaltung der Erfindung ergibt sich, wenn man den Pixelzähler CPZ in der in Figur 7 dargestellten Weise ergänzt.

Hier wird der Zählerstand BP zusätzlich noch auf einen Multiplexereingang AM des Multiplexers MUX geführt, an dessen zweiten Eingang BM ein externer Zählwert anliegt, wobei durch das Kontrollsignal C9, welches vom Timing/Kontrollmodul TKM kommt, vorgegeben wird, welches der beiden Eingangssignale am Ausgang des Multiplexers MUX anliegt. Das Ausgangssignal AMUX führt zu einem Latch L, dessen Ausgang zum Pixelzähler CPZ führt. Die Ansteuerung des Latch L erfolgt durch das Kontrollsignal C8.

Mit dieser Anordnung ist es möglich, den Ein-/Ausblendvorgang diagonal -von den Ecken beginnend- zu gestalten.

Figur 8 dient zur Erläuterung der Vorgehensweise. Die Pixelzähler haben jetzt einen Zählbereich, der so gestaltet ist, daß über 3 nebeneinander liegende Bildzeilen gezählt wird, zunächst über ein virtuelles, nicht sichtbares Bild (a), dann über den sichtbaren Bereich (b) und schließlich wieder über einen virtuellen Bereich (c). Der Grund für diese Zählweise ist aus Fig. 8 ersichtlich. Um im Bildbereich eine diagonale Grenze zu bilden, die in der rechten unteren Ecke beginnt, muß man, wenn die Grenze nicht durch Speicherwerte vorgegeben werden soll, was sehr aufwendig und teuer ist, die Grenze oben rechts im virtuellen Bild beginnen lassen. Zunächst bildet sich eine Diagonale 1 im virtuellen Bereich. Wenn die Diagonale beim nächsten Bild oder Halbbild nach links verschoben wird, dann macht sich die Diagonale 2 in der rechten unteren Ecke bemerkbar. Je weiter die Diagnale verschoben wird, desto mehr geht sie in den sichtbaren Bereich und es entsteht der Eindruck, daß die Diagonale von rechts unten nach links oben geschoben wurde. Mit Fig. 8b wird erläutert, wie die Diagonale erzeugt wird. In dieser Figur sind die Zählrichtungen der beiden Pixelzähler PZ und CPZ eingetragen, wobei AP der Zählwert von PZ und BP der Zählwert von CPZ ist.

Der Zähler AP zählt von einem Anfangswert zum Endwert einer Zeile und beginnt bei der nächsten Zeile wieder mit dem Anfangswert usw. Der Pixelzähler CPZ beginnt mit dem Endwert zu zählen. Der Komparator CP vergleicht beide Zählwerte und steuert das Kontrollmodul KM so an, daß es jeweils abhängig vom Vergleichsergebnis an den Multiplexer M ein Signal gibt, so daß entweder das Videosignal oder z.B. ein Grauwert aus dem Generator BG durchgeschaltet wird. Bei Ausblendung von rechts unten nach links oben wird jeweils das Videosignal durchgesteuert, wenn der Zählwert AP kleiner ist als BP oder im nicht sichtbaren Bereich liegt und z.B. der Grauwert wird durchgesteuert, wenn im sichtbaren Bereich der Zählwert AP größer ist als der Zählwert BP.

Der Pixelzähler wird so angesteuert, daß er vom oberen Grenzwert nach unten zählt, wobei der Zählwert nach Fig. 8b nach jeder Zeile um einen Zählwert erniedrigt wird. Der Wert nach dem ersten Dekrement, hier also der Wert in der zweiten Zeile, wird über einen Multiplexer MUX an ein Latch geführt und dort gespeichert. Dieser Wert wird beim nächsten Bild in der ersten Zeile als Anfangswert für das Bild in den Pixelzähler CPZ geladen. Damit wird die Diagonale um ein Pixel nach links geschoben. Die Ansteuerung für den Multiplexer, an dessen zweiten Eingang ein externer Anfangswert für die erste Zeile des ersten Bildes eingegeben wird, und die Ansteuerung für das Latch erfolgen nach obigen Gesichtspunkten vom Timing/Kontrollmodul TKM aus.

Die Steigung kann beliebig verändert werden, in dem man nicht nach jeder Zeile ein Pixel erhöht, sondern nach einer beliebig vorgebbaren Zeilenzahl um eine vorgebbare Pixelzahl erhöht.

Ein- und Ausblendvorgänge sind unter entsprechender Ansteuerung der Zähler, des Latch usw. nach dem oben beschriebenen Prinzip aus allen vier Ecken möglich.

Statt des im Generator BG beispielsweise erzeugten Grauwertes kann auch ein zweites Videosignal an den Multiplexer M angelegt werden, wodurch die beschriebenen Ein-/Ausblendeigenschaften auch zum Überblenden von einem Bild auf ein anderes Bild genutzt werden können.

## Patentansprüche

1. Anordnung zur Erzeugung von Ein- und Ausblendeffekten in Videogeräten, deren Bildsignale digital verarbeitet werden, mit einem Timing- und Kontrollmodul (TKM) zur Erzeugung der Steuersignale für die Elemente der Anordnung und einem ersten Pixelzähler (PZ), der die Horizontalposition des momentan verarbeiteten Videosignals angibt, und einem zweiten Pixelzähler (CPZ), der eine vorgebbare Horizontalposition eines Videosignals angibt und mit einem ersten Zeilenzähler (ZZ), der die aktuelle Vertikalposition des Videosignals angibt,
**gekennzeichnet durch**
- einen zweiten Zeilenzähler (CZZ), der eine vorgebbare Vertikalposition eines Videosignals angibt,
- einen ersten Komparator (CP), in dem die Zählerstände der Pixelzähler verglichen werden,
- einen zweiten Komparator (CZ), in dem die Zählerstände der Zeilenzähler verglichen werden,
- ein Kontrollmodul (KM), das in Abhängigkeit von den Ausgangssignalen der Komparatoren (CP,CZ) einen ersten Multiplexer (M) ansteuert, an dessen Eingängen ein Videosignal (VI) und ein in einem Generator (BG) erzeugtes zweites Videosignal anliegen,
- einen kontrollierten Inverter (CIP), der mit den Ausgängen des zweiten Pixelzählers (CPZ) verbunden ist und mit dem Übertragsbit des ersten Pixelzählers (PZ), das nach Erreichen seines Grenzwertes erzeugt wird, angesteuert wird, und
- einen zweiten kontrollierten Inverter (CIZ), der mit den Ausgängen des zweiten Zeilenzahlers (CZZ) verbunden ist und mit dem Übertragsbit des ersten Zeilenzählers (ZZ), das nach Erreichen seines Grenzwertes erzeugt wird, angesteuert wird.

2. Anordnung nach Anspruch 1, **dadurch gekennzeichnet**, daß die Zählimpulse für den ersten Pixelzähler (PZ) aus der Abtastfrequenz, die bei der AD-Wandlung des Videosignals benutzt wird und die Zählimpulse für den ersten Zeilenzähler (ZZ) aus der Zeilenfrequenz abgeleitet sind.

3. Anordnung nach Anspruch 1 oder 2, **dadurch gekennzeichnet**, daß der erste Pixelzähler (PZ) durch den Horizontalsynchronisierimpuls und der erste Zeilenzähler (ZZ) durch den Vertikalsynchronisierimpuls rückgesetzt wird.

4. Anordnung nach einem oder mehreren der Ansprüche 1 bis 3 , **dadurch gekennzeichnet**, daß anstelle des im Generator (BG) erzeugten zweiten Videosignals ein Videosignal, das einem konstanten Grau- oder Farbsignal entspricht, am Multiplexer (M) anliegt.

5. Anordnung nach einem oder mehreren der Ansprüche 1 bis 4, **dadurch gekennzeichnet**, daß die Synchronisationssignale durch eine Logikschaltung (SG) vor Veränderungen geschützt sind.

6. Anordnung nach einem oder mehreren der Ansprüche 1 bis 5, **dadurch gekennzeichnet**, daß
- das Zählerausgangssignal des zweiten Pixelzählers (CPZ) an einen zweiten Multiplexer (MUX) geführt wird,
- dem zweiten Eingang des zweiten Multiplexers (MUX) ein externes Zählersignal zugeführt wird,
- die Ansteuerung des zweiten Multiplexers (MUX) vom Timing-/Kontrollmodul (TKM) über eine Leitung (C9) des Timing- und Konrollbusses (TKB) erfolgt,
- der Ausgang des zweiten Multiplexers (MUX) an den Eingang eines Zwischenspeichers (L) führt, welcher vom Timing-/Kontrollmodul (TKM) über eine Verbindung (C8) angesteuert wird, und
- der Ausgang des Zwischenspeichers (L) zur kontrollierten Datenübergabe mit dem Eingang des zweiten Pixelzählers (CPZ) verbunden ist.

## Claims

1. Arrangement for generating fading-in and fading-out effects in video appliances whose video signals are processed digitally, comprising a timing and control module (TKM) for generating the control signals for the elements of the arrangement and a first pixel counter (PZ) which indicates the horizontal position of the video signal currently being processed, and a second pixel counter (CPZ) which indicates a specifiable horizontal position of a video signal, and a first line counter (ZZ) which indicates the current vertical position of the video signal, characterized in that
- a second line counter (CZZ) indicates a specifiable vertical position of a video signal,
- a first comparator (CP), in which the counter readings of the pixel counters are compared,
- a second comparator (CZ), in which the counter positions of the line counters are compared,
- a control module (KM), which gates, as a function of the output signals of the comparators (CP, CZ), a first multiplexer (M) at whose inputs a video signal (VI) and a second video signal generated in a generator (BG) are present,
- a controlled inverter (CIP) which is connected to the outputs of the second pixel counter (CPZ) and is gated by the carry bit of the first pixel counter (PZ) which is generated after reaching its limit value, and
- a second controlled inverter (CIZ) which is connected to the outputs of the second line counter (CZZ) and is gated by the carry bit of the first line counter (ZZ), which is generated after reaching its limit value.

2. Arrangement according to Claim 1, characterized in that the count pulses for the first pixel counter (PZ) are derived from the scanning frequency which is used in the A/D conversion of the video signal, and the count pulses for the first line counter (ZZ) are derived from the line frequency.

3. Arrangement according to Claim 1 or 2, characterized in that the first pixel counter (PZ) is reset by the horizontal synchronization pulse and the first line counter (ZZ) is reset by the field synchronization pulse.

4. Arrangement according to one or more of Claims 1 to 3, characterized in that, instead of the second video signal generated in the generator (BG), a video signal corresponding to a constant grey signal or colour signal is present at the multiplexer (M).

5. Arrangement according to one or more of Claims 1 to 4, characterized in that the synchronization signals are protected against alterations by a logic circuit (SG).

6. Arrangement according to one or more of Claims 1 to 5, characterized in that
- the counter output signal of the second pixel counter (CPZ) is fed to a second multiplexer (MUX),
- an external counter signal is fed to the second input of the second multiplexer (MUX),
- the second multiplexer (MUX) is gated by the timing/control module (TKM) via a conductor (C9) of the timing and control bus (TKB),
- the output of the second multiplexer (MUX) is fed to the input of a temporary memory (L) which is gated by the timing/control module (TKM) via a connection (C8), and
- the output of the temporary memory (L) is connected to the input of the second pixel counter (CPZ) for the purpose of controlled data transfer.

## Revendications

1. Dispositif pour produire des effets d'insertion et de suppression dans des appareils vidéo, dont les signaux d'image sont traités numériquement, comportant un module de cadencement et de contrôle (TKM) servant à produire des signaux de commande pour les éléments du dispositif, et un premier compteur de pixels (PZ), qui indique la position horizontale du signal vidéo traité instantanément, un second compteur de pixels (CPZ), qui indique une position horizontale pouvant être prédéterminée d'un signal vidéo, et un premier compteur de lignes (ZZ), qui indique la position verticale actuelle du signal vidéo, caractérisé par
- un second compteur de lignes (CZZ), qui indique une position verticale pouvant être prédéterminée d'un signal vidéo,
- un premier comparateur (CP), dans lequel les états de comptage des compteurs de pixels sont comparés,
- un second comparateur (CZ), dans lequel les états de comptage des compteurs de lignes sont comparés,
- un module de contrôle (KM), qui commande, en fonction des signaux de sortie des comparateurs (CP,CZ), un premier multiplexeur (M), aux entrées duquel sont appliqués un signal vidéo (VI) et un second signal vidéo produit dans un générateur (BG),
- un inverseur contrôlé (CIP), qui est relié aux sorties du second compteur de pixels (CPZ) et est commandé avec le bit de report du premier compteur de pixels (CZ), qui est produit une fois que la valeur limite du compteur est atteinte,
- un second inverseur contrôlé (CIZ), qui est relié aux sorties du second compteur de lignes (CZZ) et est commandé par le bit de report du premier compteur de lignes (ZZ), qui est produit une fois que la valeur limite de ce compteur est atteinte.

2. Dispositif selon la revendication 1, caractérisé en ce que les impulsions de comptage pour le premier compteur de pixels (PZ) sont dérivées de la fréquence de balayage, qui est utilisée lors de la conversion analogique/numérique du signal vidéo, et les impulsions de comptage pour le premier compteur de lignes (ZZ) sont dérivées de la fréquence de lignes.

3. Dispositif selon la revendication 1 ou 2, caractérisé en ce que le premier compteur de pixels (PZ) est ramené à zéro par l'impulsion de synchronisation horizontale et que le premier compteur de lignes (ZZ) est ramené à zéro par l'impulsion de synchronisation verticale.

4. Dispositif selon une ou plusieurs des revendications 1 à 3, caractérisé en ce qu'à la place du second signal vidéo produit dans le générateur (BG), un signal vidéo, qui correspond à un signal constant de gris ou de couleur, est appliqué au multiplexeur (M).

5. Dispositif selon une ou plusieurs des revendications 1 à 4, caractérisé en ce que des signaux de synchronisation sont protégés par un circuit logique (SG) vis-à-vis de variations.

6. Dispositif selon une ou plusieurs des revendications 1 à 5, caractérisé en ce que
- le signal de sortie du second compteur de pixels (CPZ) est envoyé à un second multiplexeur (MUX),
- un signal externe de comptage est envoyé à la seconde entrée du second multiplexeur (MUX),
- la commande du second multiplexeur (MUX) est exécutée par le module de cadencement/contrôle (TKM) par l'intermédiaire d'une ligne (C9) du bus de cadencement et de contrôle (TKB),
- la sortie du second multiplexeur (MUX) est raccordée à l'entrée d'une mémoire intermédiaire (L), qui est commandée par le module de cadencement/contrôle (TKM) par l'intermédiaire d'une liaison (C8), et
- la sortie de la mémoire intermédiaire (L) est reliée, pour le transfert contrôlé de données, à l'entrée du second compteur de pixels (CPZ).
